# FASCICULE DE BREVET EUROPEEN

(11) **EP 3 993 944 B1**
(45) Date de publication et mention de la délivrance du brevet: **04.09.2024**
(21) Numéro de dépôt: 20746259.9
(22) Date de dépôt: 01.07.2020
(51) Int. Cl.: B23K 26/066, B23K 26/067, B23K 26/382, B05B 1/14, B23K 26/0622

(54) **PROCÉDÉ DE FABRICATION D'UNE PAROI DE PULVÉRISATION**
METHOD OF MANUFACTURING A SPRAY WALL
VERFAHREN ZUR HERSTELLUNG EINER SPRÜHWAND

(30) Priorité: 02.07.2019 FR 1907335
(43) Date de publication de la demande: 11.05.2022
(73) Titulaire: APTAR France SAS, 27110 Le Neubourg (FR)
(72) Inventeur: LUISI, Bénédicte, EVREUX 27000 (FR); JEANNIN, Julien, 74410 SAINT JORIOZ (FR); LEHMANN, Eric, 27180 AULNAY SUR ITON (FR)
(74) Mandataire: CAPRI
(86) Numéro de dépôt international: PCT/FR2020/051147
(87) Numéro de publication internationale: WO 2021/001628

(56) Documents cités:
- WO-A1-2004/085835
- US-B1- 6 295 986
- US-B1- 6 313 435

## Description

La présente invention concerne un procédé de fabrication d'une paroi de pulvérisation percée d'un réseau de trous à travers lesquels un produit fluide sous pression passe de manière à être pulvérisé en fines gouttelettes comme décrit dans le préambule de la revendication 1 (voir, par exemple, US6295986 B1). La paroi de pulvérisation est en général montée dans une tête de distribution qui est alimentée en produit fluide sous pression par un organe de distribution, tel qu'une pompe ou une valve. La tête de distribution peut se présenter sous la forme d'un poussoir sur lequel un utilisateur peut appuyer à l'aide d'un doigt (en général l'index) pour actionner la pompe ou la valve de manière à refouler du produit fluide à travers la paroi de pulvérisation où il sera pulvérisé en fines gouttelettes. Ce genre de tête de distribution de produit fluide est fréquemment utilisé dans les domaines de la parfumerie, de la cosmétique ou encore de la pharmacie.

Une tête de distribution classique, par exemple du type poussoir, comprend :
- une surface d'appui sur laquelle un utilisateur peut appuyer avec un doigt, par exemple l'index,
- un puits d'entrée destiné à être raccordé à une sortie d'un organe de distribution, tel qu'une pompe ou une valve,
- un logement de montage axial dans lequel s'étend une broche, définissant une paroi latérale et une paroi frontale, et
- un gicleur en forme de godet comprenant une paroi sensiblement cylindrique dont une extrémité est obturée par une paroi de pulvérisation formant un orifice de pulvérisation, le gicleur étant monté selon un axe X dans le logement de montage axial avec sa paroi cylindrique engagée autour de la broche et sa paroi de pulvérisation en butée axiale contre la paroi frontale de la broche.

Dans le document EP1878507A2, il est décrit plusieurs modes de réalisation d'un gicleur comprenant une paroi de pulvérisation percée de plusieurs trous de pulvérisation de diamètre sensiblement ou parfaitement identique, de l'ordre de 1 à 100 µm, avec une tolérance de 20%. Une telle paroi de pulvérisation générerait un spray dont la taille des gouttelettes est relativement homogène. Dans un mode de réalisation de ce document, la paroi est bombée et les trous sont alors divergents. L'angle d'ouverture du spray reste toutefois faible. Ce document est muet quant à la technique de formation des trous.

Dans le document EP1698399A1, la paroi de pulvérisation est d'épaisseur constante, mais bombée. Les trous ont été percés perpendiculairement au plan de la paroi, alors que la paroi était encore plane. La courbure de la paroi permet de faire diverger les trous, une fois la paroi bombée. Il est précisé que les trous présentent, après bombage, une section constante sur toute leur longueur. Il n'est pas expliqué dans ce document de quelle manière, ni à quel moment, la paroi plane percée est bombée. Sur les dessins, la courbure du bombage est faible, de sorte que l'angle d'ouverture du spray est faible. Ce document prévoit de réaliser les trous au laser ou par gravure.

La présente invention a pour but de définir un procédé de fabrication au laser d'une paroi de pulvérisation, qui est très rapide et qui garantit une stricte identité et/ou précision des trous.

Pour atteindre ce but, la présente invention propose un procédé de fabrication d'une paroi de pulvérisation qui comprend les étapes suivantes :
a) disposer d'une source laser apte à produire un faisceau Laser,
b) conformer le faisceau laser en un réseau de faisceaux Laser partiels,
c) diriger le réseau de faisceaux laser partiels de manière à impacter une membrane,
d) laisser le réseau de faisceaux laser partiels impacter la membrane pour y percer un réseau de trous, de manière à obtenir une paroi de pulvérisation percée d'un réseau de trous,
caractérisé en ce que l'intégralité des trous de la paroi de pulvérisation peuvent être percés, consécutivement, par plusieurs réseaux de faisceaux laser partiels, avantageusement issus d'une unique source laser.

Conformément à l'invention, l'étape b) comprend de diriger le faisceau laser sur un masque apte à bloquer ou absorber une partie du faisceau laser et à laisser passer ou réfléchir une autre partie du faisceau laser sous la forme du réseau de faisceaux laser partiels. Le masque peut se présenter sous la forme d'un tamis ou d'une grille, ou encore sous la forme d'un miroir partiellement réfléchissant. La précision du masque va fortement influer sur l'identité des trous percés dans la membrane.

Selon l'invention, plusieurs séries de trous peuvent être réalisées consécutivement avec des masques, le nombre de trous par série étant inférieur à environ 30, avantageusement de l'ordre de 20 et de préférence de l'ordre de 10. Moins il y a de trous par série et moins le faisceau laser a besoin d'être puissant. De plus, la qualité du perçage est meilleure avec un faible nombre de trous, car ils peuvent être plus éloignés les uns des autres. Deux trous proches sont affectés par une quantité d'énergie importante concentrée dans une surface réduite.

Avantageusement, au moins un des masques d'une série est différent des masques des autres séries. Ainsi, on peut décomposer un réseau total de trous en sous-réseaux complémentaires, qui peuvent être identiques ou différents. Cela permet d'éloigner les trous percés simultanément les uns des autres pour garantir leur qualité. Les trous percés simultanément peuvent être distants les uns des autres d'au moins 20 µm et de préférence d'environ 70 µm, voire même de 100 µm à 200 µm.

Selon une autre caractéristique de l'invention, la paroi de pulvérisation peut être réalisée en matière polymère, de préférence en PP ou en PBT, et présenter une épaisseur de 50 µm à 250 µm, de préférence de 90 à 150 µm.

Selon une caractéristique très intéressante, le faisceau laser présente une longueur d'onde dans l'infra-rouge comprise entre 950 nm et 1100 nm, avantageusement de l'ordre de 1030 nm.

Par ailleurs, le faisceau laser peut présenter une durée d'impulsion inférieure à 10 picosecondes, avantageusement de l'ordre de 0,26 picosecondes.

Il est à noter que la longueur d'onde de 950 nm et 1100 nm et/ou la durée d'impulsion inférieure à 10 picosecondes pour le faisceau laser est/sont des caractéristiques qui peuvent être mise en oeuvre indépendamment du fait de percer au laser en mettant en oeuvre plusieurs réseaux de faisceaux laser partiels conduisant à plusieurs séries de trous percées consécutivement avec des masques complémentaires identiques ou différents. Une protection individuelle pourrait être recherchée pour chacune de ces deux caractéristiques ou une combinaison de ces deux caractéristiques.

Les faisceaux laser partiels sont avantageusement parallèles, mais ils peuvent aussi être convergents ou divergents, en disposant par exemple une lentille convergente ou divergente entre le masque et la membrane à percer.

Selon une mise en oeuvre simple, la membrane est au moins localement plane et peut s'étendre perpendiculairement aux faisceaux laser partiels. Chaque faisceau laser partiel peut ainsi impacter la membrane de manière identique. Il est également possible de moduler chaque faisceau laser partiel de manière différenciée.

Selon une mise en oeuvre plus complexe, la membrane est au moins localement plane et peut s'étendre obliquement par rapport aux faisceaux laser partiels.

Selon une autre mise en oeuvre complexe, la membrane est bombée et présente un axe ou un plan de symétrie qui peut être parallèle ou confondu avec les faisceaux laser partiels. Le terme « bombé » englobe toutes les formes non entièrement planes, comme les dômes convexes ou concaves, les cônes, les pyramides, les coudes, les plis, etc.

Par ailleurs, la membrane peut être déformée avant perçage. Alternativement ou cumulativement, la paroi de pulvérisation peut être déformée après perçage.

Selon une forme de réalisation de base, l'intégralité des trous de la paroi de pulvérisation peuvent être percés simultanément par un réseau de faisceaux laser partiels issu d'une unique source laser.

Selon une forme de réalisation plus complexe, l'intégralité des trous de la paroi de pulvérisation peuvent être percés, avantageusement simultanément, par plusieurs réseaux de faisceaux laser partiels issus respectivement de plusieurs sources laser. Ainsi, on peut percer une première série de trous avec une inclinaison et/ou taille donnée et une seconde série de trous avec une autre inclinaison et/ou taille. En fonction du réseau de trous que l'on veut obtenir, on utilisera une ou plusieurs source laser.

Pour obtenir un spray optimal dans les domaines de la parfumerie, de la cosmétique ou de la pharmacie, les trous peuvent présenter une section de passage de l'ordre de 0,5 µm2 à 700 µm2, avantageusement de 10 µm2 à 300 µm2 et préférentiellement de 50 µm2 à 200 µm2. Par ailleurs, le réseau de trous peut présenter une section de passage cumulée de l'ordre de 1000 µm2 à 20000 µm2, avantageusement de 3000 µm2 à 8000 µm2 et préférentiellement de 3500 µm2 à 6500 µm2. Il est à noter que ces sélections de valeurs de section de passage (de chaque trou et de l'ensemble des trous) sont des caractéristiques qui peuvent être mises en oeuvre indépendamment du procédé de fabrication de la paroi de pulvérisation. Elles pourront par conséquent faire l'objet d'une protection en soi, éventuellement dans le cadre d'un poussoir monté sur une pompe ou une valve.

L'esprit de l'invention repose sur le fait de masquer, diviser, filtrer ou morceler un faisceau laser pour créer une pluralité de faisceaux partiels qui sont parallèles entre eux et qui vont percuter une membrane plane perpendiculaire ou inclinée et/ou une membrane bombée pour y percer des trous de pulvérisation de produit fluide.

L'invention sera maintenant plus amplement décrite en référence aux dessins joints, donnant à titre d'exemples non limitatifs, plusieurs modes de réalisation de l'invention.

Sur les figures :
La figure 1 est une vue schématique illustrant un procédé de micro-perçage laser selon une première forme de réalisation de l'invention,
La figure 2 est une vue en plan du masque utilisé dans le procédé de micro-perçage laser de la figure 1,
La figure 3 est une vue en plan de la paroi de pulvérisation obtenue par micro-perçage d'une membrane,
La figure 4a est une vue très schématique montrant une membrane qui est disposée de manière inclinée par rapport aux faisceaux laser,
La figure 4b est une vue en coupe transversale à travers la paroi de pulvérisation résultant du micro-perçage laser de la membrane de la figure 4a,
La figure 5a est une autre vue très schématique illustrant une membrane bombée impactée par des faisceaux laser,
La figure 5b est une vue en coupe transversale à travers la paroi de pulvérisation résultant du micro-perçage laser de la membrane de la figure 5a,
La figure 6a est une vue similaire à celle de la figure 1 pour un deuxième mode de réalisation de l'invention,
La figure 6b est une vue en coupe transversale à travers la paroi de pulvérisation résultant du micro-perçage laser de la membrane de la figure 6a,
La figure 7a est une vue similaire à celle de la figure 1 pour un troisième mode de réalisation de l'invention,
La figure 7b est une vue en coupe transversale à travers la paroi de pulvérisation résultant du micro-perçage laser de la membrane de la figure 7a.

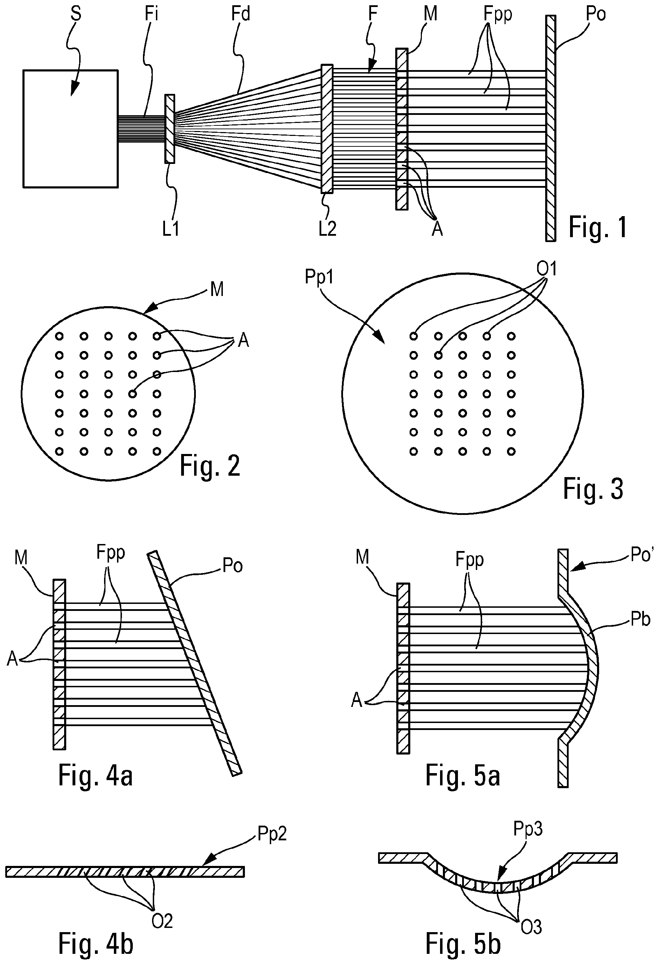

On se référera tout d'abord à la figure 1 pour expliquer en détail le système de micro-perçage laser permettant de percer des micro-trous dans une membrane P0, dont les caractéristiques sont données ci-après. Le système de micro-perçage comprend tout d'abord une source laser S qui est apte à produire un faisceau laser initial Fi qui est dirigé vers un masque M, qui est un élément essentiel de l'invention. Le faisceau initial Fi peut directement atteindre le masque M. En variante représentée sur la figure 1, le faisceau initial Fi peut d'abord traverser une première lentille divergente L1 de manière à obtenir un faisceau divergent Fd qui passe ensuite à travers une lentille convergente L2 de manière à obtenir un faisceau laser parallèle élargi F qui va impacter le masque M. Bien que non représentés, les faisceaux lasers entre la source S et le masque M peuvent encore être déviés à l'aide des miroirs. La fonction du masque M est de conformer le faisceau laser F en un réseau de faisceaux lasers partiels Fpp, qui sont ici parallèles entre eux. Le masque M peut se présenter sous la forme d'un tamis ou d'une grille définissant des ouvertures de passage A pour une partie du faisceau laser F. Le masque M peut être réalisé avec n'importe quel matériau approprié. Il peut se présenter sous la forme d'un modulateur dynamique. Dans le cas de la figure 1, le masque M est un masque traversant, en ce sens que le faisceau laser F traverse le masque M. En variante non représentée, le masque pourrait également être du type réfléchissant ou miroir, ne reflétant qu'une partie du faisceau laser F. Le masque M est fixe durant l'opération de micro-perçage laser. En variante, on peut prévoir de déplacer le masque M pour réaliser des trous de formes complexes dans la membrane P0. Quel que soit le type de masque, il est créé un réseau de faisceaux lasers partiels parallèles Fpp, qui va impacter la membrane P0 pour y percer des micro-trous O1.

La figure 2 montre le masque M avec ses ouvertures de passage A, qui sont ici rondes: elles pourraient cependant présenter une autre forme, comme par exemple carrée, triangulaire, ovale ou encore de fente.

La figure 3 montre la paroi de pulvérisation Pp qui résulte du micro-perçage de la membrane P0. On peut y voir un réseau de trous O1, qui est strictement identique au réseau d'ouvertures de passage A du masque M.

On peut remarquer sur la figure 1 que la membrane P0 est plane et s'étend de manière perpendiculaire aux faisceaux partiels parallèles Fpp. Ainsi, les trous O1 correspondent en taille et en disposition au réseau de faisceaux lasers partiels parallèles Fpp issus du masque M, lorsqu'il est fixe.

Sur la figure 4a, on voit le masque M avec ses ouvertures de passage A, duquel part un réseau de faisceaux lasers partiels parallèles Fpp identique à celui de la figure 1. En revanche, la membrane P0 n'est pas disposée perpendiculairement aux faisceaux partiels parallèles Fpp, mais au contraire de manière oblique ou inclinée, de sorte que les micro-trous O2 ainsi percés s'étendent de manière inclinée dans la paroi de pulvérisation Pp2, visible sur la figure 4b.

Sur la figure 5a, on voit à nouveau le masque M des figures 1 et 4a, duquel est issu un réseau de faisceaux partiels parallèles Fpp qui impacte une membrane P0', qui comprend une partie centrale bombée Pb. La membrane P0' est orientée de telle sorte que l'axe de symétrie de la partie bombée Pb est parallèle ou confondu avec les faisceaux lasers partiels parallèles Fpp. Au final, on obtient une paroi de pulvérisation Pp3 avec des trous parallèles O3, comme visible sur la figure 5b.

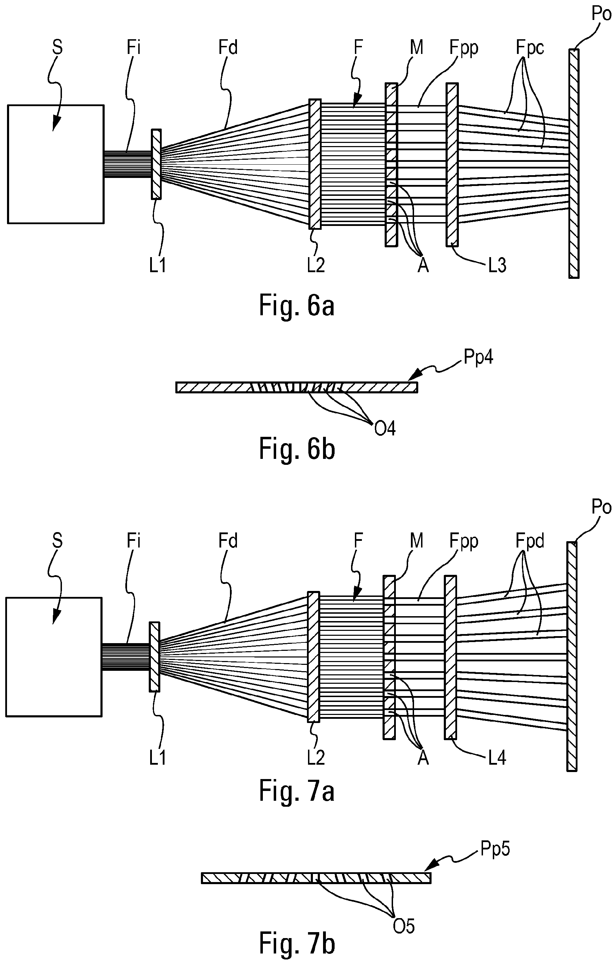

Sur la figure 6a, on voit un système de micro-perçage laser qui se différencie de celui de la figure 1 en ce qu'une lentille convergente L3 est disposée entre le masque M et la membrane à percer P0. Ainsi, les faisceaux lasers partiels parallèles Fpp issus du masque M sont déviés de manière convergente lors de leur passage à travers la lentille convergente L3, de manière à obtenir un réseau de faisceaux lasers partiels convergents Fpc, qui va impacter la membrane P0 de manière inclinée. Ainsi, on obtient une paroi de pulvérisation Pp4 avec des trous inclinés convergents O4, comme on peut le voir sur la figure 6b. Seul le trou central est réalisé perpendiculairement au plan de la paroi de pulvérisation Pp4.

La figure 7a est une variante de réalisation de la figure 6a, dans laquelle la lentille convergente L3 a été remplacée par une lentille divergente L4, de manière à obtenir un réseau de faisceaux lasers partiels divergentes Fpd, qui va impacter la membrane P0 de manière à y percer des trous inclinés, comme on peut le voir sur la figure 7b, qui illustre une paroi de pulvérisation Pp5 percée de trous divergents O5.

Ainsi, les différents modes de réalisation permettent de percer des micro-trous O1, O2, O3, O4, O5 dans une membrane qui est plane ou profilée, par exemple bombée. La membrane peut être disposée perpendiculairement aux faisceaux lasers partiels, comme c'est le cas de la figure 1, ou encore de manière inclinée, comme sur la figure 4a.

Les faisceaux partiels peuvent être parallèles, comme ceux Fpp des figures 1, 4a et 5a, ou encore convergents comme ceux Fpc de la figure 6a ou divergents comme ceux Fpd de la figure 7a.

Lors de l'opération de micro-perçage laser, la membrane est maintenue dans un état fixe et constant. Toutefois, elle peut être déformée avant ou après l'étape de micro-perçage laser. Par exemple, la paroi de pulvérisation Pp1 peut être bombée après micro-perçage. La paroi de pulvérisation Pp3 peut être aplatie ou déformée de manière symétrique après micro-perçage. Il est en de même pour les parois de pulvérisation Pp4, Pp5 qui peuvent être profilées avant ou après perçage.

La membrane P0 ou P0' peut par exemple être réalisée en métal, comme de l'acier inoxydable. Il est également envisageable de réaliser la membrane à partir d'une matière plastique ou d'un mélange de matières plastiques. On peut également réaliser la membrane sous la forme d'un laminé, comprenant par exemple une ou plusieurs couche(s) de métal et une ou plusieurs couche(s) de matière plastique. La membrane peut aussi être réalisée en silicium.

Le type de source laser S dépend de la taille des trous que l'on veut réaliser. Pour des trous de 1 à 20 µm, un laser fixe par percussion sera préféré. Pour des trous supérieurs à 20 µm, un laser rotatif par trépanation sera préféré.

La longueur d'onde du rayonnement lumineux peut-être quelconque : il faut l'adapter en fonction de la qualité de perçage et du matériau. Par exemple, le perçage d'un acier inoxydable recommande l'utilisation d'une source laser générant un rayonnement lumineux IR de longueur d'onde comprise entre 950 nm et 1100 nm. La durée d'impulsion optimale est inférieure à 10 picosecondes et de préférence de l'ordre de 0,26 picosecondes. La cadence de d'impulsion est de 0,1 à 70 kHz. La stabilité du pointé θ ≤ 50 µrad. L'énergie nécessaire est de 1 à 50 mJ. Elle dépend du nombre de trou, de l'épaisseur de la surface et du nombre d'impulsion. Par exemple, pour la réalisation de 50 trous entre 10 et 15 µm, on a besoin d'une énergie comprise entre 3 et 35 mJ.

L'épaisseur de la membrane/paroi de pulvérisation, au niveau où sont formés les trous, est de l'ordre de 10 µm à 500 µm, avantageusement de 30 µm à 100 µm. L'épaisseur de la membrane/paroi de pulvérisation est de préférence constante, mais une épaisseur variable est également envisageable. Le diamètre de la paroi de pulvérisation Pp, au niveau où sont formés les trous, est de l'ordre de 0,3 mm à 5 mm. Le diamètre des trous est de l'ordre de 1 à 100 µm, avantageusement de l'ordre de 10 à 30 µm, et de préférence de l'ordre de 5 à 20 µm. Plus généralement encore, les trous peuvent présenter une section de passage de l'ordre de 0,5 µm2 à 700 µm2, avantageusement de 10 µm2 à 300 µm2 et préférentiellement de 50 µm2 à 200 µm2. Le réseau de trous d'une paroi de pulvérisation peut présenter une section de passage cumulée de l'ordre de 1000 µm2 à 20000 µm2, avantageusement de 3000 µm2 à 8000 µm2 et préférentiellement de 3500 µm2 à 6500 µm2. On peut par exemple prévoir 50 trous de 10 à 12 µm2 ou 20 trous de 20 µm2 ou 80 trous de 8 µm2 ou encore 300 trous de 6 µm2.

Selon un mode de réalisation préféré, une paroi de pulvérisation, présentant par exemple un diamètre d'environ 1 mm, peut être percée de 30 à 60 trous ayant un diamètre de l'ordre de 8 à 20 µm, par exemple la moitié avec un diamètre de 9 µm et l'autre moitié avec un diamètre de 16 µm. La densité des trous par mm² est de l'ordre de 40 à 80. Avantageusement, les trous ne sont pas tous percés en même temps avec un seul masque, mais en séries consécutives comprenant un maximum d'environ 30 trous par série. Il est même préférable de réduire le nombre de trous à environ 20, et de préférence environ 10. Le terme « environ » doit être compris comme une tolérance de l'ordre de 10%. Chaque série de trous utilise un masque qui peut être identique, ou au contraire différent. Tous les masques peuvent être différents entre eux ou différents par paire. Un seul des masques peut être différent des autres qui sont tous identiques. On peut aussi utiliser un masque dynamique dont on peut modifier le motif de passage/blocage. Par ailleurs, les trous d'une série, qui sont donc percés simultanément, sont distants les uns des autres d'au moins 20 µm et de préférence d'environ 70 µm. Une distance de 100 µm à 200 µm est toutefois possible.

Grâce au procédé de micro-perçage laser IR selon l'invention, on peut fabriquer des parois de pulvérisation de toute forme avec des micro-trous parallèles, inclinés, divergents ou convergents. Tous les trous de la paroi de pulvérisation peuvent être réalisés simultanément au moyen d'un seul système de micro-perçage laser. En variante, les trous peuvent être réalisés en plusieurs opérations de micro-perçage laser, au moyen d'un ou de deux système(s) de micro-perçage laser et d'un seul masque ou de plusieurs masques différents. Une série de trous peut être réalisée en même temps que qu'une autre série de trous, ou au contraire les séries de trous peuvent être réalisés consécutivement. L'intégralité des trous peut présenter une configuration identique, par exemple cylindrique ou tronconique. En variante, on peut prévoir deux séries de trous de tailles et/ou de configurations différentes.

## Revendications

1. Procédé de fabrication d'une paroi de pulvérisation (Pp1 ; Pp2 ; Pp3 ; Pp4 ; Pp5) percée d'un réseau de trous (O1 ; O2 ; O3 ; O4 ; O5) à travers lesquels un produit fluide sous pression passe de manière à être pulvérisé en fines gouttelettes, le procédé comprenant les étapes suivantes :
a) disposer d'une source laser (S) apte à produire un faisceau laser (F),
b) conformer le faisceau laser (F) en un réseau de faisceaux laser partiels parallèles (Fpp ; Fpc ; Fpd), en dirigeant le faisceau laser (F) sur au moins un masque (M) apte à bloquer ou absorber une partie du faisceau laser (F) et à laisser passer ou réfléchir une autre partie du faisceau laser (F) sous la forme du réseau de faisceaux laser partiels (Fpp ; Fpc ; Fpd),
c) diriger le réseau de faisceaux laser partiels (Fpp ; Fpc ; Fpd) de manière à impacter une membrane (P0 ; P0'),
d) laisser le réseau de faisceaux laser partiels (Fpp ; Fpc ; Fpd) impacter la membrane (P0 ; P0') pour y percer un réseau de trous (O1 ; O2 ; O3 ; O4 ; O5), de manière à obtenir une paroi de pulvérisation (Pp1 ; Pp2 ; Pp3 ; Pp4 ; Pp5) percée d'un réseau de trous (O1 ; O2 ; O3 ; O4 ; O5), l'intégralité des trous (O1 ; O2 ; O3 ; O4 ; O5) de la paroi de pulvérisation (Pp1 ; Pp2 ; Pp3 ; Pp4 ; Pp5) étant percés, consécutivement, par plusieurs réseaux de faisceaux laser partiels,
**caractérisé en ce que** plusieurs séries de trous (O1 ; O2 ; O3 ; O4 ; O5) sont réalisées consécutivement avec des masques (M), le nombre de trous (O1 ; O2 ; O3 ; O4 ; O5) par série étant inférieur à environ 30, avantageusement de l'ordre de 20 et de préférence de l'ordre de 10, de manière à augmenter l'espace entre deux trous réalisés lors d'une même série de trous sans diminuer la densité finale des trous de la paroi de pulvérisation.

2. Procédé selon la revendication 1, dans lequel au moins un des masques (M) d'une série est différent des masques (M) des autres séries.

3. Procédé selon l'une quelconque des revendications précédentes, dans lequel les trous (O1 ; O2 ; O3 ; O4 ; O5) percés simultanément sont distants les uns des autres d'au moins 20 µm et de préférence d'environ 70 µm.

4. Procédé selon l'une quelconque des revendications précédentes, dans lequel le faisceau laser (F) présente une longueur d'onde comprise entre 950 nm et 1100 nm, avantageusement de l'ordre de 1030 nm.

5. Procédé selon l'une quelconque des revendications précédentes, dans lequel le faisceau laser présente une durée d'impulsion inférieure à 10 picosecondes, avantageusement de l'ordre de 0,26 picosecondes.

6. Procédé selon l'une quelconque des revendications précédentes, dans lequel la paroi de pulvérisation (Pp1 ; Pp2 ; Pp3 ; Pp4 ; Pp5) est réalisée en matière polymère, de préférence en PP ou en PBT, et présente une épaisseur de 50 µm à 250 µm, de préférence de 90 à 150 µm.

7. Procédé selon l'une quelconque des revendications précédentes, dans lequel les faisceaux laser partiels (Fpp) sont parallèles, convergents ou divergents.

8. Procédé selon l'une quelconque des revendications précédentes, dans lequel la membrane (P0) est au moins localement plane et s'étend perpendiculairement aux faisceaux laser partiels (Fpp ; Fpc ; Fpd).

9. Procédé selon l'une quelconque des revendications précédentes, dans lequel la membrane (P0') est bombée et présente un axe ou un plan de symétrie qui est parallèle ou confondu avec les faisceaux laser partiels (Fpp).

10. Procédé selon l'une quelconque des revendications précédentes, dans lequel la paroi de pulvérisation (Pp1 ; Pp2 ; Pp3 ; Pp4 ; Pp5) est déformée après perçage.

11. Procédé selon l'une quelconque des revendications précédentes, dans lequel les trous (O1 ; O2 ; O3 ; O4 ; O5) présentent une section de passage de l'ordre de 0,5 µm² à 700 µm², avantageusement de 10 µm² à 300 µm² et préférentiellement de 50 µm² à 200 µm².

12. Procédé selon l'une quelconque des revendications précédentes, dans lequel le réseau de trous (O1 ; O2 ; O3 ; O4 ; O5) présente une section de passage cumulée de l'ordre de 1000 µm² à 20000 µm², avantageusement de 3000 µm² à 8000 µm² et préférentiellement de 3500 µm² à 6500 µm².

13. Procédé selon l'une quelconque des revendications précédentes, dans lequel les trous (O1 ; O2 ; O3 ; O4 ; O5) présentent une densité par mm² de l'ordre de 40 à 80, de préférence d'environ 50.

## Patentansprüche

1. Verfahren zur Herstellung einer Sprühwand (Pp1; Pp2; Pp3; Pp4; Pp5), die von einem Array von Löchern (O1; O2; O3; O4; O5) durchbrochen ist, durch die ein unter Druck stehendes Fluidprodukt hindurchtritt, um in feine Tröpfchen zerstäubt zu werden, wobei das Verfahren die folgenden Schritte umfasst:
a) Bereitstellen einer Laserquelle (S), die geeignet ist, einen Laserstrahl (F) zu erzeugen,
b) Formen des Laserstrahls (F) zu einem Array aus parallel verlaufenden partiellen Laserstrahlen (Fpp; Fpc; Fpd), indem der Laserstrahl (F) auf zumindest eine Maske (M) gerichtet wird, die geeignet ist, einen Teil des Laserstrahls (F) zu blockieren oder zu absorbieren und einen anderen Teil des Laserstrahls (F) in Form des Arrays von partiellen Laserstrahlen (Fpp; Fpc; Fpd) durchzulassen oder zu reflektieren,
c) Ausrichten des Arrays aus partiellen Laserstrahlen (Fpp; Fpc; Fpd) so, dass es auf eine Membran (P0; P0') auftrifft,
d) Auftreffen lassen des Arrays von partiellen Laserstrahlen (Fpp; Fpc; Fpd) auf die Membran (P0; P0'), um in diese ein Array von Löchern (O1; O2; O3; O4; O5) bohren, um so eine Sprühwand (Pp1; Pp2; Pp3; Pp4; Pp5) zu erhalten, die von einem Array von Löchern (O1; O2; O3; O4; O5) durchbrochen ist, wobei alle Löcher (O1; O2; O3; O4; O5) der Sprühwand (Pp1; Pp2; Pp3; Pp4; Pp5) nacheinander von mehreren Arrays von partiellen Laserstrahlen gebohrt werden,
**dadurch gekennzeichnet, dass** mehrere Reihen von Löchern (O1; O2; O3; O4; O5) nacheinander mit Masken (M) hergestellt werden, wobei die Anzahl der Löcher (O1; O2; O3; O4; O5) pro Reihe weniger als etwa 30 beträgt, vorteilhafterweise in der Größenordnung von 20 und vorzugsweise in der Größenordnung von 10 liegt, um den Zwischenraum zwischen zwei in derselben Reihe von Löchern gebildeten Löchern zu vergrößern, ohne dabei die endgültige Dichte der Löcher in der Sprühwand zu verringern.

2. Verfahren nach Anspruch 1,
wobei sich zumindest eine der Masken (M) einer Reihe von den Masken (M) der weiteren Reihen unterscheidet.

3. Verfahren nach einem der vorhergehenden Ansprüche,
wobei die gleichzeitig gebohrten Löcher (O1; O2; O3; O4; O5) um zumindest 20 µm und vorzugsweise um etwa 70 µm voneinander entfernt liegen.

4. Verfahren nach einem der vorhergehenden Ansprüche,
wobei der Laserstrahl (F) eine Wellenlänge zwischen 950 nm und 1100 nm, vorteilhafterweise in der Größenordnung von 1030 nm, aufweist.

5. Verfahren nach einem der vorhergehenden Ansprüche,
wobei der Laserstrahl eine Impulsdauer von weniger als 10 Pikosekunden, vorteilhafterweise in der Größenordnung von 0,26 Pikosekunden, aufweist.

6. Verfahren nach einem der vorhergehenden Ansprüche,
wobei die Sprühwand (Pp1; Pp2; Pp3; Pp4; Pp5) aus einem polymeren Material, vorzugsweise PP oder PBT, hergestellt ist und eine Dicke von 50 µm bis 250 µm, vorzugsweise von 90 bis 150 µm, aufweist.

7. Verfahren nach einem der vorhergehenden Ansprüche,
wobei die partiellen Laserstrahlen (Fpp) parallel, konvergent oder divergent verlaufen.

8. Verfahren nach einem der vorhergehenden Ansprüche,
wobei die Membran (PO) zumindest bereichsweise eben ist und sich senkrecht zu den partiellen Laserstrahlen (Fpp; Fpc; Fpd) erstreckt.

9. Verfahren nach einem der vorhergehenden Ansprüche,
wobei die Membran (PO') gewölbt ist und eine Symmetrieachse oder -ebene aufweist, die parallel zu den partiellen Laserstrahlen (Fpp) verläuft oder mit diesen zusammenfällt.

10. Verfahren nach einem der vorhergehenden Ansprüche,
wobei die Sprühwand (Pp1; Pp2; Pp3; Pp4; Pp5) nach dem Bohren umgeformt wird.

11. Verfahren nach einem der vorhergehenden Ansprüche,
wobei die Löcher (O1; O2; O3; O4; O5) einen Durchlassquerschnitt in der Größenordnung von 0,5 µm² bis 700 µm², vorteilhaft von 10 µm² bis 300 µm² und bevorzugt von 50 µm² bis 200 µm² aufweisen.

12. Verfahren nach einem der vorhergehenden Ansprüche,
wobei das Array von Löchern (O1; O2; O3; O4; O5) einen kumulierten Durchlassquerschnitt im Bereich von 1000 µm² bis 20.000 µm², vorteilhaft von 3.000 µm² bis 8.000 µm² und bevorzugt von 3.500 µm² bis 6.500 µm² aufweist.

13. Verfahren nach einem der vorhergehenden Ansprüche,
wobei die Löcher (O1; O2; O3; O4; O5) eine Dichte pro mm² in der Größenordnung von 40 bis 80, vorzugsweise von etwa 50, aufweisen.

## Claims

1. A method of manufacturing a spray partition (Pp1; Pp2; Pp3; Pp4; Pp5) pierced by a network of holes (O1; O2; O1; O2; O3) through which a fluid product passes under pressure so as to be broken into fine droplets, the process comprising the following steps:
a) providing a laser source (S) able to produce a laser beam (F),
b) forming the laser beam (F) into an array of parallel partial laser beams (Fpp; Fpc; Fpd), by directing the laser beam (F) onto at least one mask (M) able to block or absorb a portion of the laser beam (F) and to allow another portion of the laser beam (F) to pass or be reflected in the form of the array of partial laser beams (Fpp; Fpc; Fpd),
c) directing the array of partial laser beams (Fpp; Fpc; Fpd) so as to strike a membrane (P0; P0'),
d) letting the array of partial laser beams (Fpp; Fpc; Fpd) strike the membrane (P0; P0') with a view to piercing a network of holes into it (O1; O2; O3; O4; O5), so as to obtain a spray partition (Pp1; Pp2; Pp3; Pp4; Pp5) pierced with network of holes (O1; O2; O3; O4; O5), the entirety of the holes (O1; O2; O3; O4; O5) of the spray partition (Pp1; Pp2; Pp3; Pp4; Pp5) are pierced consecutively by a plurality of arrays of partial laser beams,
**characterised in that** several series of holes (O1; O2; O3; O4; O5) are made consecutively with masks (M), the number of holes (O1; O2; O3; O4; O5) per series being less than about 30, advantageously about 20 and preferably about 10, so as to increase the space between two holes in the same series of holes without reducing the final density of holes in the spray partition.

2. The method according to Claim 1, wherein at least one of the masks (M) of one series is different from the masks (M) of the other series.

3. The method according to any preceding claims, wherein the holes (O1; O2; O3; O4; O5) pierced simultaneously are spaced apart from each other by at least 20 µm and preferably by about 70 µm.

4. The method according to any preceding claims, wherein the laser beam (F) has a wavelength of 950 nm to 1100 nm, advantageously about 1030 nm.

5. The method according to any preceding claims, wherein the laser beam has a pulse duration of less than 10 picoseconds, advantageously about 0.26 picoseconds.

6. The method according to any preceding claims, wherein the spray partition (Pp1; Pp2; Pp3; Pp4; Pp5) is made from a polymeric material, preferably PP or PBT, and has a thickness from 50 to 250 µm, preferably from 90 to 150 µm.

7. The method according to any preceding claims, wherein the partial laser beams (Fpp) are parallel, convergent or divergent.

8. The method according to any preceding claims, wherein the membrane (P0) is at least locally planar and extends perpendicularly to the partial laser beams (Fpp; Fpc; Fpd).

9. The method according to any preceding claims, wherein the membrane (P0') is of rounded shape and has an axis or plane of symmetry that is parallel to or coincident with the partial laser beams (Fpp).

10. The method according to any preceding claims, wherein the spray partition (Pp1; Pp2; Pp3; Pp4 ; Pp5) is deformed after piercing.

11. The method according to any preceding claims, wherein the holes (O1; O2; O3; O4; O5) have a flow section of about 0.5 to 700 µm², advantageously 10 to 300 µm², and preferably 50 to 200 µm².

12. The method according to any preceding claims, wherein the network of holes (O1; O2; O3; O4; O5) has a combined flow section of about 1,000 to 20,000 µm², advantageously 3000 to 8,000 µm² and preferably 3500 to 6,500 µm².

13. The method according to any preceding claims, wherein the holes (O1; O2; O3; O4; O5) has a density per mm² of about 40 to 80, preferably about 50.
